# EUROPEAN PATENT SPECIFICATION

(11) **EP 2 271 998 B1**
(45) Date of publication and mention of the grant of the patent: **06.08.2014**
(21) Application number: 08747221.3
(22) Date of filing: 30.04.2008
(51) Int. Cl.: G06F 15/16, G06F 17/00, H04N 7/15, H04L 29/06, H04L 12/18, H04N 7/14

(54) **EVENT MANAGEMENT SYSTEM**
EREIGNISVERWALTUNGSSYSTEM
SYSTÈME DE GESTION D' ÉVÉNEMENTS

(43) Date of publication of application: 12.01.2011
(73) Proprietor: Hewlett-Packard Development Company, L.P., Houston, TX 77070 (US)
(72) Inventor: BEERS, Ted, Corvallis OR 97330-4239 (US); GORZYNSKI, Mark, E., Corvallis OR 97333 (US); MITCHELL, April, S., Palo Alto CA 97304-1100 (US); MANDIGO, Lonnie, D., Corvallis OR 97330-4239 (US); O'HARA, Kenton, P., Marsfield New South Wales 2122 (AU); BREWSTER, Jon, A., Corvallis OR 97330-4239 (US); DEROCHER, Michael, D., Corvallis OR 97330-4239 (US)
(74) Representative: Exell, Jonathan Mark
(86) International application number: PCT/US2008/062068
(87) International publication number: WO 2009/134260

(56) References cited:
- US-A- 5 530 472
- US-A- 5 729 687
- US-A- 5 959 697
- US-A1- 2002 064 136
- US-A1- 2002 091 658
- US-A1- 2003 234 859
- US-A1- 2005 174 951

## Description

### Background

Video teleconferencing systems allow for collaboration between people in different locations. These systems allow participants to interact with one another through the use of audio and video equipment that provides real time audio and video communications. The process of connecting people across various locations may become complex, particularly where different groups of people desire to use part of the same teleconferencing system for different teleconferences. It would be desirable to be able to efficiently manage teleconferencing systems across different teleconferences. US 2005/174951 discloses a method for an ad hoc buffer. US 2002/064136 discloses a optimization for multi-point conferences. US 5530472 concerns the solving of conflicting time schedules of conferences.

### Statement of the Invention

According to an aspect of the invention, there is provided a system according to claim 1. According to another aspect of the present invention, there is provided a method according to claim 9 and a computer program product according to claim 15.

### Brief Description of the Drawings

Figure 1 is a block diagrams illustrating one embodiment of an event system.
Figures 2A-2B are block diagrams illustrating embodiments of an event endpoint.
Figure 3A is a block diagram illustrating one embodiment of a configuration of audio / video devices.
Figure 3B is a block diagram illustrating another embodiment of a configuration of audio / video devices.
Figure 4 is a flow chart illustrating one embodiment of a method performed by an event management system.

### Detailed Description

In the following detailed description of the preferred embodiments, reference is made to the accompanying drawings, which form a part hereof, and in which is shown by way of illustration specific embodiments in which the invention may be practiced. It is to be understood that other embodiments may be utilized and structural or logical changes may be made without departing from the scope of the present invention. The following detailed description, therefore, is not to be taken in a limiting sense.

As described herein, an event management system manages collaboration events such as video teleconferences. The event management system maintains registered event specifications for each collaboration event and dynamic event context information that describes the status of collaboration events relative to each other. The event management system uses the registered event specifications and the dynamic event context information to optimize the interaction between collaboration events and the resolution of any overlap between collaboration events. The term overlap refers to a commonality of resources between two or more events that may prevent one or more of the events from proceeding as currently defined by the respective registered event specifications for the one or more events. The commonality may include an event endpoint, an event attendee, an event resource, or at least a network resource.

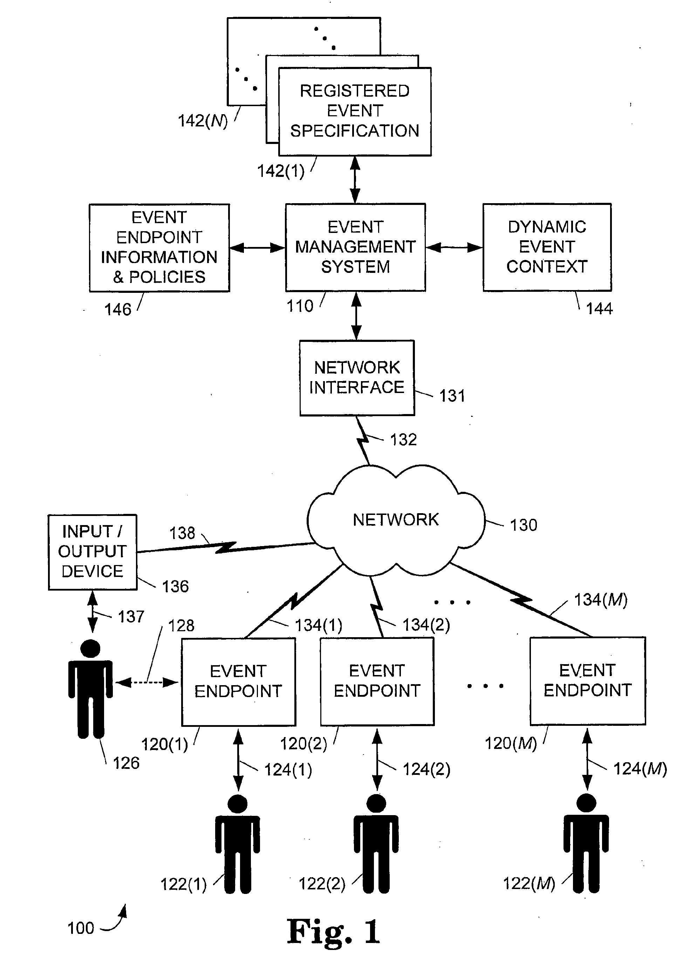

Figure 1 is a block diagrams illustrating one embodiment of a collaboration event system 100. Collaboration event system 100 includes an event management system 110, a set of event endpoints 120(1)-120(*M*), and a network 130 that interconnects event management system 110 and event endpoints 120.

Collaboration event system 100 is configured to create and host collaboration events. A collaboration event is an activity with experiential relevance to people, possessing an extension in time and location. Examples of a collaboration event (hereafter "event") include telepresence videoconferences and meetings conducted using collaboration studio such as a "Halo studio" offered by Hewlett-Packard Co. For each event, collaboration event system 100 exchanges a selected set of A/V media streams 124(1)-124(*M*) between a selected set or subset of event endpoints 120(1)-120(*M*).

An event includes a set of collaboration system topologies, each of which include a set or subset of event endpoints 120(1)-120(M). An event also includes a registered event specification 142 that specifies information such as a unique identity token, a purpose, a list of event attendees, a list of event resources, contact information of a host of the event, a priority of the event, start and end dates and times, and / or an event duration. Event resources may include event endpoints 120, physical locations (e.g., a collaboration studio or conference room), input/output devices 136 (e.g., interaction touchpoints), and attendees 122.

The collaborative event may take place in two or more locations (e.g., different cities) that each have an event endpoint 120 to connect a set of one or more attendees 122 or media resources in each of the locations. Cameras and microphones, for example, may capture video and audio from one or more of the locations (i.e., at one endpoint) and the video and audio may be output using one or more display devices and speakers, for example, at one or more other locations (i.e., one or more other endpoints). In addition, various types of pre-recorded A/V data, such as content from a DVD, may be transported to one or more of the locations where it may be output using a display device or speakers, for example. One or more locations of the collaborative event may include arrangements of office furniture (e.g., office chairs and a conference table) and A/V gear to provide users with gaze awareness and a full immersion feeling.

Event management system 110 is configured to initiate, execute, host, and optimize collaboration events using registered event specifications 142(1)-142(N), dynamic event context 144, and event endpoint information and policies 146. Each event is registered with event management system 110, either in advance (i.e., scheduled ahead of time) or in real time (i.e., scheduled on an ad hoc basis), to create a registered event specification 142 for the event using any suitable device for accessing event management system 110 (e.g., an event endpoint 120 or an input / output device 136). Event management system 110 may reference and use each registered event specification 142 for various purposes including preparation for and execution of an event in accordance with the information in a registered event specification 142.

Dynamic event context 144 is real-time information that describes the status of events (e.g., in-progress, interrupted, extended, etc.), the status of events relative to each other (e.g., overlapping or not overlapping based on the start and end times of events), the status of event endpoints 120 and other media resources (e.g., available, reserved, in use or otherwise occupied, or unavailable), and the status of attendees 122 (e.g., checked-in at an event endpoint 120 or elsewhere or not checked-in along with any special privilege indicators or other attendee designations) for each event. Event management system 110 generates and maintains dynamic event context 144 to monitor and manage the real-time system status of collaboration event system 100.

Endpoint information and policies 146 describes the locations, topologies, configurations, and operation policies of event endpoints 120(1)-120(*M*). Event management system 110 accesses event endpoint information and policies 146 for use in configuring and optimizing collaboration events. Event management system 110 may also reference and use other system information such as the time of day in the process of managing collaboration events.

Each event endpoint 120(1)-120(*M*) provides a respective set of one or more attendees 122(1)-122(*M*) with a respective set of one or more audio and / or visual media streams 124(1)-124(*M*) using network 130. Each event endpoint 120 includes any suitable type, number, and combination of audio and / or visual input and / or output devices that are configured to generate, provide, and / or receive the respective set of media streams 124. Media streams 124 may each be any suitable combination of live or pre-recorded audio and / or video data that may be combined in any suitable way and output to any number of attendees 122 in any number of event endpoints 120 by collaboration event system 100. Each set of attendees 122(1)-122(*M*) includes one or more people where the number of people may stay the same, increase, or decrease during the course of an event. In addition, the set of event endpoints 120 for an event may stay the same, increase, or decrease during the course of an event.

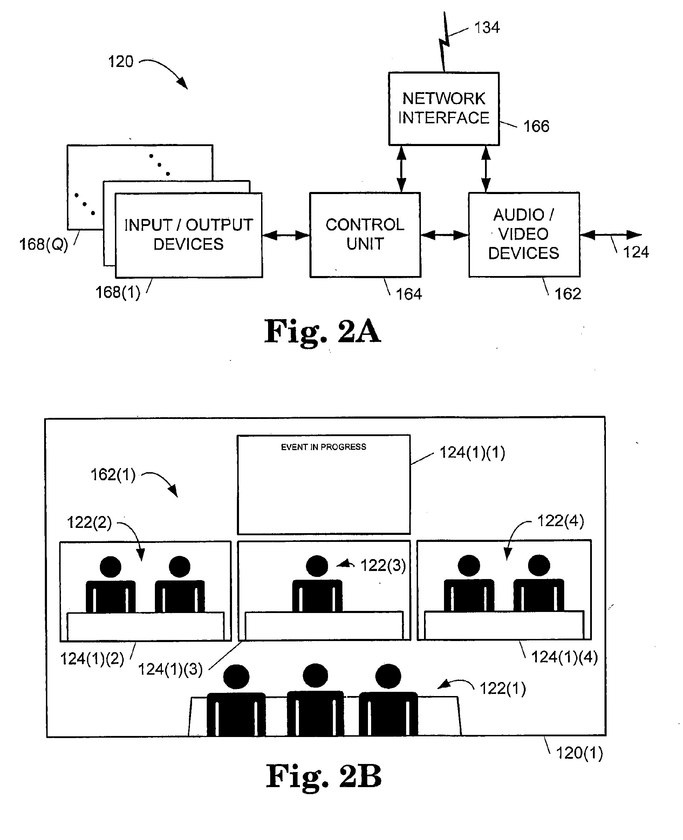

Figures 2A-2B are block diagrams illustrating embodiments of event endpoint 120. In the embodiment of Figure 2A, event endpoint 120 includes a set of one or more audio and / or video (A/V) devices 162, a control unit 164, a network interface 166 and a set of one or more input / output (I/O) devices 168(1)-168(*Q*).

A/V devices 162 includes any type, number, and combination of audio and / or video input and / or output devices. Examples of A/V input devices include microphones, still and video cameras, media players, and computer and storage systems. The A/V input devices capture, detect, receive or otherwise input live or pre-recorded media streams 124 and provide the input media streams 124 to control unit 164 and / or network interface 166. Examples of A/V output devices include speakers, headphones, headsets, media recorders, and display devices such as projectors, computer monitors, and televisions. The A/V output devices receive media streams from control unit 164 and / or network interface 166 and provide, display, play, or otherwise output live or pre-recorded media streams 124.

Control unit 164 manages the operation of event endpoint 120 by providing control signals and / or other information to and receiving control signals and / or other information from A/V devices 162, network interface 166 and input / output devices 168(1)-168(*Q*). In some embodiments, control unit 164 may perform processing on media streams received from A/V devices 162 and / or network interface 166 prior to the media streams being provided to network interface 166 or output by A/V devices 162. The processing may include coding or decoding media streams from one media and / or network format to another media and / or network format.

Network interface 166 includes any suitable type, number, and / or combination of network devices that allow event endpoint 120 to communicate with network 130 using network connection 134. Network interface 166 receives media streams across network connection 134 and provides the media streams to control unit 164 and / or A/V devices 162. Network interface 166 also receives media streams from control unit 164 and / or A/V devices 162 and provides the media streams to network 130 using network connection 134.

I/O devices 168(1)-168(*Q*) include any suitable type, number, and / or combination of input and / or output devices that allow attendees 122, administrators, or other users to communicate with event endpoint 120. The communications may cause event endpoint 120 and / or collaboration event system 100 to perform functions indicated by attendees 122, administrators, or other users. Examples of I/O devices 168 include interaction touchpoints, display screens, keyboards, and selection or navigation devices (e.g., a mouse, joystick, flywheel, or touchpad).

In other embodiments, the functionality of an A/V device 162 and an I/O device 168 may be included in a single unit such as a laptop computer. In addition, other embodiments may include A/V devices 162 but omit I/O devices 168 or may include I/O devices 168 but omit A/V devices 162.

Figure 2B illustrates an embodiment of the operation of endpoint 120(1). Endpoint 120(1) provides attendees 122(1) who present at endpoint 120(1) with media streams 124(1)(1)-124(1)(4) using any suitable type and / or combination of audio / video devices 162(1). Audio / video devices 162(1) are configured to allow for gaze awareness and a full immersion feeling for attendees 120(1).

In the example of Figure 2B, media stream 124(1)(1) provides information about the event attended by attendees 122(1) (e.g., status information, notifications, configuration options, etc.) and media streams 124(1)(2)-124(1)(4) provide audio and video representations of by attendees 122(2)-122(4), respectively, who are present at event endpoints 120(2)-120(4), respectively. Attendees 122(1)-122(4) collectively represent the set of attendees who are present for the event illustrated by the example of Figure 2B. In other embodiments, endpoint 120(1) may provide other numbers of media streams 124(1) to attendees 120(1) and may have other configurations of audio / video devices 162(1) relative to attendees 120(1).

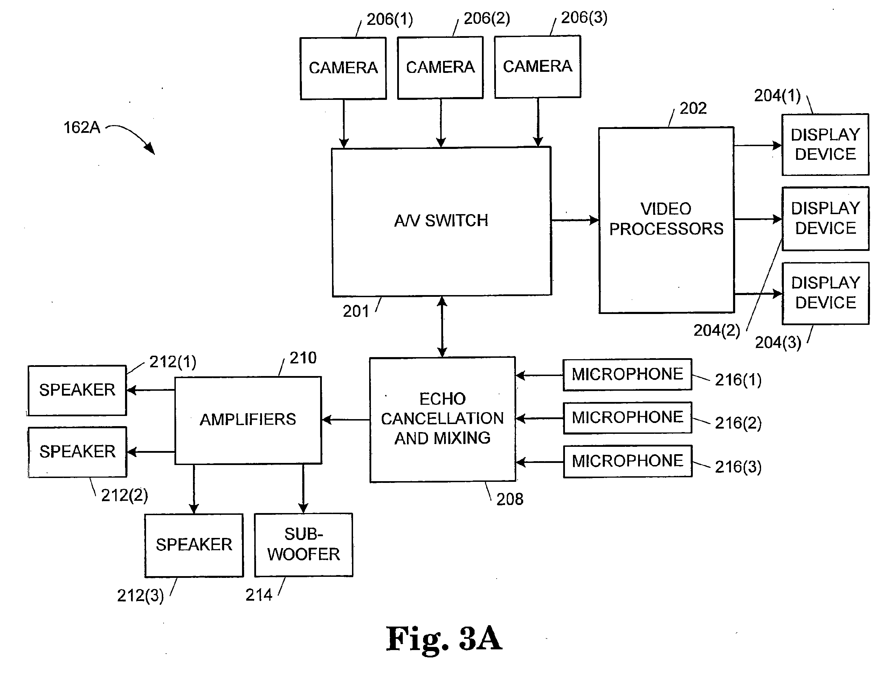

Figures 3A-3B are block diagrams illustrating embodiments of configurations of audio / video devices 162.

In one embodiment, A/V devices 162 includes integrated A/V gear that forms a collaboration studio such as a "Halo studio" offered by Hewlett-Packard Co. as shown in the embodiment 162A of Figure 3A. In the embodiment of Figure 3A, video processors 202 provide video data from A/V switch 201 to display devices 204(1)-204(3), and display devices 204(1)-204(3) display the video data. Cameras 206(1)-206(3) capture video data and provide the video data to A/V switch 201. An echo cancellation and mixing unit 208 mixes and processes audio data from A/V switch 201 and provides the processed audio data to amplifiers 210. Amplifiers 210 amplify the audio data and provide the audio data to speakers 212(1)-212(3) and sub-woofer 214. Speakers 212(1)-212(3) output the higher frequencies of the audio data, and sub-woofer 214 outputs the lower, bass frequencies of the audio data. Microphones 216(1)-216(3) capture audio data and provide the audio data to A/V switch 201.

Display devices 204(1)-204(3) may be arranged in such a manner around a conference table and chairs to allow for gaze awareness and a full immersion feeling in one embodiment.

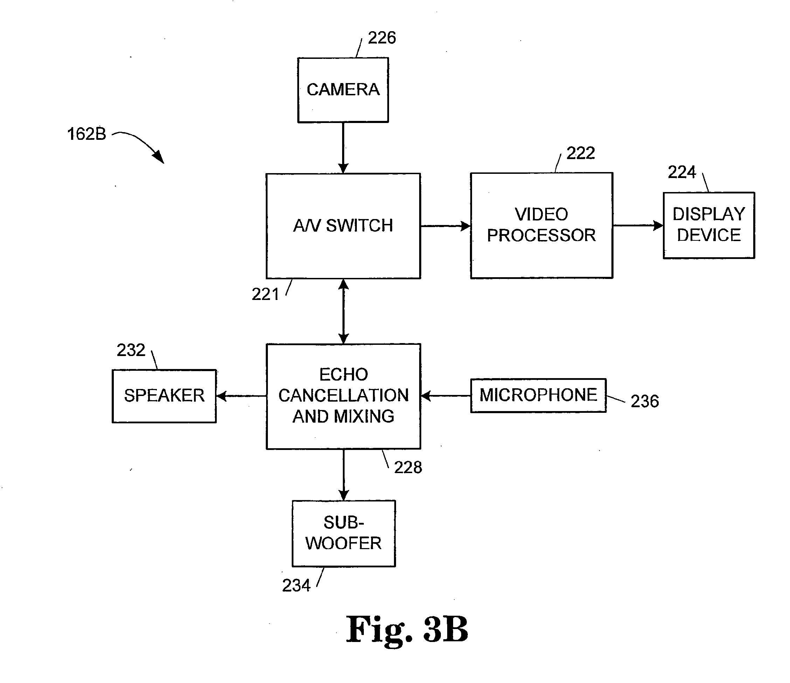

In another embodiment, A/V devices 162 includes A/V gear as shown in the embodiment 162B of Figure 3B. In the embodiment of Figure 3B, video processor 222 provides video data from A/V switch 221 to display device 224, and display device 224 displays the video data. Camera 226 captures video data and provides the video data to A/V switch 221. An echo cancellation and mixing unit 208 mixes and processes audio data from A/V switch 201 and provides the processed audio data to speaker 232 and sub-woofer 234. Speaker 232 outputs the higher frequencies of the audio data, and sub-woofer 234 outputs the lower, bass frequencies of the audio data. Microphone 236 captures audio data and provide the audio data to A/V switch 201.

Referring back to Figure 1, network 130 may be any suitable type of network or combination of networks formed from any suitable number, type, and / or combination of network devices (not shown). The network devices may operate using any suitable network protocol or protocols and may connect to any suitable number of event endpoints 120 or other computer or storage systems. Network 130 may include any suitable combination of a secure networks (e.g., enterprise networks or corporate intranets) with limited and secure connections to other systems or unsecure networks with at least one unsecure connection to another system.

Network 130 may be a local, regional, or global network of any suitable network configuration that ranges from local point-to-point connections between event management system 110 and event endpoints 120 to a global array of connections that interconnect event management system 110 and event endpoints 120. Network 130 may be private or publicly available and include one or more connections to the Internet.

Network 130 may be designed specifically to optimize high bandwidth with low latency to be able to transport live, interactive, audio, video, and other data rich media streams. Network 130 may have a smallest link of 45 Mbps, in one embodiment, to avoid any significant serialization delay. Network 130 may also use a flat network topology to minimize latency. In order to keep a high quality end-user experience, network 130 may keep the total one-way latency between any event endpoints 120 to less than one-quarter of a second. This total latency may encompass all aspects of encoding/decoding, encapsulation/de-encapsulation, capture and presentation, filtering, processing, compression and decompression, image compositing, and transport latencies across the transmission path. As the contribution of each component of network 130 to overall latency decreases (as technology improves), the length of the "reach" of where different sites can be physically located may be increased.

To better preserve the shortest paths capable of reliable delivery with little packet loss, bandwidth and network resource mechanisms (not shown) may be used to insure high-quality sessions for the duration of the collaboration session. As most traffic streams are presumed to take place linking a pair or small number of event endpoints 120 together for any given session, event management system 110 may have little presumption of event pre-emption once authorized events commence. In some embodiments, longer latency and/or loss tolerant sessions may be provided over network 130. Such services may include directory, presence, messaging, credential verification, calibration, and time/name services for examples.

The interior of network 130 may concentrate on speedy delivery of traffic flows. Any access control, encryption/decryption and other proxy services, if needed, may occur at the edge of network 130 such as in event endpoints 120 and not the interior of network 130 in some embodiments. This design may make the core of the backbone of network 130 simpler to grow, maintain, stable, and very fast.

Event management system 110 connects to network 130 using a network interface 131 and a network connection 132, and event endpoints 120(1)-120(M) connect to network 130 using respective network connections 134(1)-134(*M*). Each network connection 132 and 134(1)-134(*M*) may include any suitable type, number, and / or combination of wired or wireless network connections. For example, network connections 132 and 134(1)-134(*M*) may each be a leased line (i.e., a T3, optical, cable, or wireless high speed link) which provides a large data pipe to and from event management system 110, event endpoints 120(1)-120(*M*), and input/output device 136, respectively.

Input / output (I/O) device 136 may be any suitable type of device (e.g., a portable or non-portable device such as a computer, a cell phone, a media player, or a personal digital assistant) configured to communicate with event management system 110. I/O device 136 is configured to receive inputs from a user 126 and / or provide outputs to user 126 as indicated by an arrow 137. I/O device 136 may be a component of an event endpoint 120 (i.e., an I/O device 168) or may be separate from an event endpoint 120. I/O device 136 connects to network 130 using any suitable wired or wireless network connection 138. I/O device 136 may be omitted in some embodiments.

In operation, event management system 110 initiates, executes, hosts, and optimizes collaboration events using registered event specifications 142(1)-142(*N*), dynamic event context 144, and event endpoint information and policies 146.

Event management system 110 initiates execution of an event by allocating resources for creating a real-time representation of the event according to the registered event specification 142 of the event to optimize the experience of attendees 122. The allocated resources include the set or a subset of event endpoints 120 as indicated by the registered event specification 142. Event management system 110 continues execution of the event with changes to the topology of the event (e.g., the addition or removal of event endpoints 120 during the event) to maintain and optimize the experience of attendees 122 and ends as dictated by the registered event specification 142 or by external inputs (e.g., from an attendee 122). During execution, event management system 110 may describe an event as being "in-progress".

In preparation for event execution (i.e., during event preparation) and / during event execution, certain activities may be performed by event resources or event management system 110 that impact the management of the event, such as an attendee 122 checking in at an endpoint location or another location. During the course of the lifecycle of an event, additional related artifacts may be added to the event, such as an archive of the execution of the event.

Event management system 110 optimizes event preparation and event execution for each registered event that requires various resources including those resources whose states may impact event preparation and execution. The optimization accounts for resources that may be in use by one or more in-progress events, resources that may be unavailable (e.g., requested for use by another event or out of service), key event attendees 122 that are missing, and other critical event information. Event management system 110 also optimizes event execution for in-progress events by preventing unwanted disruption of an event using resources required by the registered event and by handling requests for resources made by other events.

Event management system 110 performs the optimization using registered event specifications 142 for all related events including the primary event being prepared and other events in progress that are consuming needed resources and dynamic event context information 144 which includes information about event resources (e.g., resources used by other in-progress events and other status information about needed resources). Event management system 110 may also perform the optimization using information provided by attendees, administrators, and / or other users via I/O devices 168 and / or 136 associated with the event in progress and the registered events and event endpoint information and policies 146. Event endpoint information and policies 146 includes information about the physical and assigned relationships among resources, including relationship information about event endpoints 120 and I/O devices 168 and / or 136, policies regarding the management of shared resources to facilitate optimal event execution, and principles governing the systems behaviors in consideration of the multitude of registered and dynamic information.

Using inputs from registered event specifications 142, dynamic event context information 144, I/O devices 168 and / or 136, and event endpoint information and policies 146, event management system 110 applies event optimization policies to interact with an in-progress event, with related resources such as endpoints 120, and with related input/output devices 168 and / or 136. In doing so, event management system 110 optimizes the experience of attendees 122 such as by event preparation and creating a plan for execution when an overlap is detected between an in-progress event and a scheduled event.

As used herein, the term overlap refers to a commonality of resources between two or more events that may prevent one or more of the events from proceeding as currently defined by the respective registered event specifications 142 for the one or more events. The commonality may be an event endpoint or endpoints 120, an event attendee 122, an event resource (e.g., AN equipment), or at least a portion of network 130 or network interfaces and connections 132 or 134, for example, where the commonality is not conducive to being used by two or more events at the same time or close to the same time.

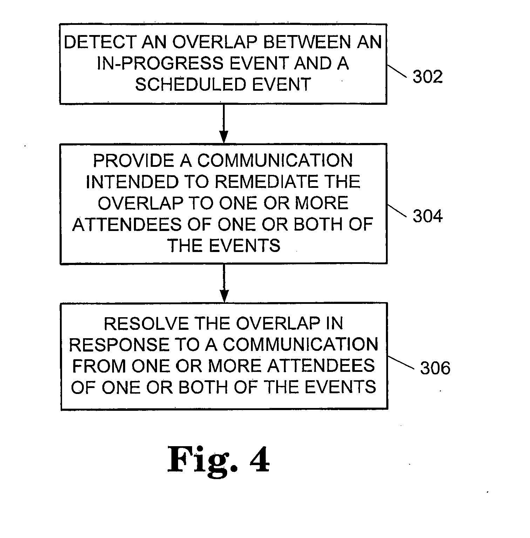

Figure 4 is a block diagram illustrating one embodiment of a method performed by event management system 110. In the embodiment of Figure 4, event management system 110 detects an overlap between an in-progress event and a scheduled event as indicated in a block 302. Event management system 110 detects the overlap using registered event specifications 142, dynamic event context information 144, I/O devices 168 and / or 136, and / or event endpoint information and policies 146. Event management system 110 may detect the overlap prior to or upon initiating the scheduled event as defined by the registered event specification 142 for the scheduled event. Event management system 110 may also detect the overlap in response to receiving an input from an I/O device 168 or 136 (e.g., an attendee 126 of the scheduled event checking in using I/O device 168 or 136 or an attendee 122 extending the in-progress event using I/O device 168 or 136).

The in-progress event includes a first subset of event endpoints 120(1)-120(M) configured to provide respective media streams 124 to respective attendees 122 during the event. Similarly, the scheduled event is scheduled to begin after the in-progress event and include a second subset of event endpoints 120(1)-120(*M*) configured to provide respective media streams 124 to respective attendees 122 during the event. Event management system 110 may detect an overlap where one or more of the first and the second subsets of event endpoints 120 are the same as indicated by registered event specifications 142 and / or dynamic event context information 144.

For example, the in-progress event may include event endpoints 120(1) and 120(2) and provide respective sets of media streams 124(1) and 124(2) to respective sets of attendees 122(1) and 122(2). The scheduled event may be scheduled to include event endpoints 120(1) and 120(3) where an attendee 126 of the scheduled event seeks or will seek to use event endpoint 120(1) as indicated by an arrow 128 while event endpoint 120(1) is in use by the set of attendees 122(1). Because both the in-progress and scheduled events seek to use event endpoint 120(1), event management system 110 detects an overlap between the events.

Event management system 110 provides at least one communication intended to remediate the overlap to one or more attendees 122 or 126 of one or both of the in-progress and / or scheduled events using network interface 131 as indicated in a block 304. The communication or communications provided by event management system 110 are intended remediate the overlap by prompting an action on the part of one or more attendees 122 or 126 of one or both of the in-progress and scheduled events. Event management system 110 provides the communication or communications to the one or more attendees using one or more event endpoints 120 of the in-progress and / or scheduled event and / or I/O device 136.

Referring to the example above, event management system 110 provides one or more communications that are intended to remediate the overlap to one or more of attendees 122(1), 122(2), 122(3) and / or 126 using respective endpoints 120(1), 120(2), 120(3) and / or input/output device 136. Communications to attendees 126 and / or 122(3) of the scheduled event, if any, may include a notice of the overlap and / or a notice of alternate resources to use for the scheduled event. Communications to attendees 122(1) and / or 122(2) of the in-progress event, if any, may also include a notice of the overlap and / or a notice of alternate resources to use for the in-progress event.

Event management system 110 resolves the overlap in response to a communication received from one or more attendees of one or both of the in-progress and / or scheduled events using network interface 131 as indicated in a block 306. Event management system 110 receives one or more communications from one or more of the attendees 122 or 126 that received the communication intended to remediate the overlap. Based on the communication received by event management system 110, event management system 110 may provide additional communications intended to remediate the overlap to the same or a different set of one or more attendees 122 or 126 and may receive additional communications from attendees 122 or 126 that received any of the communications intended to remediate the overlap.

Event management system 110 resolves the overlap in accordance with the communication or communications received from attendees 122 and / 126 of the in-progress and / or scheduled events. In the above example, event management system 110 may cause attendees 126 and 122(3) of the scheduled event to wait until the in-progress event finishes with an overlapping endpoint 120 or direct attendees 126 and 122(3) of the scheduled event to an alternate endpoint 120. Event management system 110 may also cause attendees 122(1) and 122(2) of the in-progress event to finish with an overlapping endpoint 120 or direct attendees 122(1) and 122(2) of the in-progress event to an alternate endpoint 120.

Upon resolution of the overlap, event management system 110 causes the scheduled event to begin and provides media streams 124 to respective sets of attendees 122 using respective event endpoints 120.

In the above embodiments, event management system 110 may include any suitable combination of hardware and software components. In one embodiment, event management system 110 includes one or more programs that is stored in any suitable type, number, and / or combination of portable or non-portable storage media (not shown) within or otherwise accessible to event management system 110. The programs are accessible to and executable by any suitable type, number, and / or combination of processors (not shown) in event management system 110 to perform the functions described above.

Although specific embodiments have been illustrated and described herein for purposes of description of the preferred embodiment, it will be appreciated by those of ordinary skill in the art that a wide variety of alternate and/or equivalent implementations may be substituted for the specific embodiments shown and described without departing from the scope of the present invention. Those with skill in the optical, mechanical, electromechanical, electrical, and computer arts will readily appreciate that the present invention may be implemented in a very wide variety of embodiments. This application is intended to cover any adaptations or variations of the preferred embodiments discussed herein. Therefore, it is manifestly intended that this invention be limited by the claims.

## Claims

1. A system comprising
a network interface (131); and
an event management system (110) configured to detect an overlap being a communality of resources between a first event and a second event that is scheduled to begin after the first event, the first event including a first set of event endpoints (120) configured to provide a first set of media streams (124) to a first set of attendees (122) and the second event including a second set of event endpoints (120) configured to provide a second set of media streams (124) to a second set of attendees (122), wherein an event endpoint comprises a device or system configured to generate, provide and/or receive the respective set of media streams (124); **characterised in that**
the event management system (110) is configured to provide a first communication using the network interface (131) to one or more of the first set of attendees, the first communication prompting an action by the one or more of the first set of attendees to remediate the overlap so that resources for the first event are distinct from resources for the second event, wherein upon resolution of the overlap, the event management system (110) is configured to cause the second event to begin, including providing media streams (124) to the second set of attendees (122) using respective endpoints (120).

2. The system of claim 1 wherein the event management system (110) is configured to monitor the real-time status of the system and generate dynamic context event information, the dynamic context information including information on relative status of events including start and end times of the events and availability of event endpoints (120) and other media resources, the event management system (110) being configured to detect the overlap using first and second registered event specifications associated with the first and the second events, respectively, and the dynamic event context information.

3. The system of claim 1 wherein the event management system (110) is configured to receive a second communication from the one of the first set of attendees (122) using the network interface (131) subsequent to providing the first communication.

4. The system of claim 3 wherein the event management system (110) is configured to resolve the overlap in response to receiving the second communication.

5. The system of claim 3 wherein the event management system (110) is configured to provide a third communication to at least one of the second set of attendees (122) using the network interface (131) in response to receiving the second communication.

6. The system of claim 1 wherein the event management system (110) is configured to provide a second communication intended to remediate the overlap to at least one of the second set of attendees (122) using the network interface (131).

7. The system of claim 1 wherein the event management system (110) is configured to initiate the second event in accordance with a registered event specification associated with the second event.

8. The system of claim 1 wherein the event management system (110) is configured to cause the second set of event endpoints to provide the second set of media streams (124) to the second set of attendees (122) subsequent to the overlap being resolved.

9. A method comprising
detecting an overlap, being a communality of resources between a first event that is in progress and a second event that is scheduled to begin, the first event configured to provide a first set of media streams (124) to a first set of attendees (122) using a first set of event endpoints (120), the second event configured to provide a second set of media streams (124) to a second set of attendees (122) using a second set of event endpoints (120), an event endpoint (120) comprising a device or system configured to generate, provide and/or receive the respective set of media streams (124); **characterised by** providing a first communication to one or more of the first set of attendees (122) prompting an action by the one or more of the first set of attendees (122) to remediate the overlap so that resources for the first event are distinct from resources for the second event ; and,
upon resolution of the overlap, causing the second event to begin, including providing media streams (124) to the second set of attendees (122) using respective endpoints (120).

10. The method of claim 9 further comprising: providing the first communication to the at least one of the first set of attendees (122) using at least one of the first event endpoints (120).

11. The method of claim 9 further comprising: providing a second communication intended to remediate the overlap to at least one of the second set of attendees (122) using at least one of the second event endpoints (120).

12. The method of claim 9 further comprising: detecting the overlap in response to at least one of the second set of attendees (122) checking in for the second event.

13. The method of claim 9 further comprising: resolving the overlap using a second communication received from at least one of the first set of attendees (122) subsequent to providing the first communication.

14. The method of claim 9 wherein one of the first set of event endpoints (120) is the same as one of the second set of event endpoints (120).

15. A computer program product comprising computer program code means for performing all of the steps of any of claims 9 to 14 when said program is run on a computer.

## Patentansprüche

1. System, das Folgendes umfasst:
eine Netzwerkschnittstelle (131); und
ein Ereignisverwaltungssystem (110), das dazu konfiguriert ist,
eine Überlagerung zu erfassen, die eine Kommunalität von Ressourcen zwischen einem ersten Ereignis und einem zweiten Ereignis, das nach dem ersten Ereignis starten soll, darstellt,
wobei das erste Ereignis einen ersten Satz von Ereignisendpunkten (120) beinhaltet, die dazu konfiguriert sind, einen ersten Satz von Medienstreams (124) für eine erste Gruppe von Teilnehmern (122) bereitzustellen, und das zweite Ereignis einen zweiten Satz von Ereignisendpunkten (120) beinhaltet, die dazu konfiguriert sind, einen zweiten Satz von Medienstreams (124) für eine zweite Gruppe von Teilnehmern (122) bereitzustellen, wobei ein Ereignisendpunkt ein Gerät oder System umfasst, das dazu konfiguriert ist, den jeweiligen Satz von Medienstreams (124) zu erzeugen, bereitzustellen und/oder zu empfangen; **dadurch gekennzeichnet, dass**
das Ereignisverwaltungssystem (110) dazu konfiguriert ist, eine erste Kommunikation mithilfe der Netzwerkschnittstelle (131) für einen oder mehrere der ersten Gruppe von Teilnehmern bereitzustellen, wobei die erste Kommunikation den einen oder die mehreren der ersten Gruppe von Teilnehmern zu einer Aktivität auffordert, um die Überlagerung zu korrigieren, so dass Ressourcen für das erste Ereignis sich von Ressourcen für das zweite Ereignis unterscheiden, wobei bei Auflösung der Überlagerung das Ereignisverwaltungssystem (110) dazu konfiguriert ist, den Start des zweiten Ereignisses zu veranlassen, einschließlich der Bereitstellung von Medienstreams (124) für die zweite Gruppe von Teilnehmern (122) mithilfe der jeweiligen Endpunkte (120).

2. Das System nach Anspruch 1, wobei das Ereignisverwaltungssystem (110) dazu konfiguriert ist, den Echtzeitstatus des Systems zu überwachen und dynamische Ereigniskontextinformationen zu erzeugen, wobei die dynamischen Kontextinformationen Informationen zum relativen Status von Ereignissen einschließlich Start- und Endzeiten der Ereignisse und Verfügbarkeit von Ereignisendpunkten (120) und anderen Medienressourcen beinhalten, wobei das Ereignisverwaltungssystem (110) dazu konfiguriert ist, die Überlagerung mithilfe von mit dem ersten bzw. dem zweiten Ereignis verknüpften Spezifikationen zum ersten und zweiten registrierten Ereignis und den dynamischen Ereigniskontextinformationen zu erfassen.

3. Das System nach Anspruch 1, wobei das Ereignisverwaltungssystem (110) dazu konfiguriert ist, eine zweite Kommunikation von dem einen der ersten Gruppe von Teilnehmern (122) mithilfe der Netzwerkschnittstelle (131) zu empfangen, die auf die Bereitstellung der ersten Kommunikation folgt.

4. Das System nach Anspruch 3, wobei das Ereignisverwaltungssystem (110) dazu konfiguriert ist, die Überlagerung in Reaktion auf den Empfang der zweiten Kommunikation aufzulösen.

5. Das System nach Anspruch 3, wobei das Ereignisverwaltungssystem (110) dazu konfiguriert ist, eine dritte Kommunikation für den mindestens einen der zweiten Gruppe von Teilnehmern (122) mithilfe der Netzwerkschnittstelle (131) in Reaktion auf den Empfang der zweiten Kommunikation bereitzustellen.

6. Das System nach Anspruch 1, wobei das Ereignisverwaltungssystem (110) dazu konfiguriert ist, eine zweite Kommunikation, die dazu gedacht ist, die Überlagerung zu korrigieren, für mindestens einen der zweiten Gruppe von Teilnehmern (122) mithilfe der Netzwerkschnittstelle (131) bereitzustellen.

7. Das System nach Anspruch 1, wobei das Ereignisverwaltungssystem (110) dazu konfiguriert ist, das zweite Ereignis gemäß einer mit dem zweiten Ereignis verknüpften Spezifikation zum registrierten Ereignis zu initiieren.

8. Das System nach Anspruch 1, wobei das Ereignisverwaltungssystem (110) dazu konfiguriert ist, zu bewirken, dass der zweite Satz von Ereignisendpunkten den zweiten Satz von Medienstreams (124) für die zweite Gruppe von Teilnehmern (122) bereitstellt, nachdem die Überlagerung aufgelöst ist.

9. Verfahren, das Folgendes umfasst:
Erfassen einer Überlagerung, die eine Kommunalität von Ressourcen zwischen einem ersten Ereignis, das gerade läuft, und einem zweiten Ereignis, das starten soll, darstellt, wobei das erste Ereignis dazu konfiguriert ist, einen ersten Satz von Medienstreams (124) für eine erste Gruppe von Teilnehmern (122) mithilfe eines ersten Satzes von Ereignisendpunkten (120) bereitzustellen, wobei das zweite Ereignis dazu konfiguriert ist,
einen zweiten Satz von Medienstreams (124) für eine zweite Gruppe von Teilnehmern (122) mittels eines zweiten Satzes von Ereignisendpunkten (120) bereitzustellen, wobei ein Ereignisendpunkt (120) ein Gerät oder System umfasst, das dazu konfiguriert ist, den jeweiligen Satz von Medienstreams (124) zu erzeugen, bereitzustellen und/oder zu empfangen; **gekennzeichnet durch**
das Bereitstellen einer ersten Kommunikation für einen oder
mehrere der ersten Gruppe von Teilnehmern (122) und Auffordern des einen oder der mehreren der ersten Gruppe von Teilnehmern (122) zu einer Aktivität, um die Überlagerung zu korrigieren, sodass Ressourcen für das erste Ereignis sich von Ressourcen für das zweite Ereignis unterscheiden; und bei Auflösung der Überlagerung Veranlassen des Starts des zweiten Ereignisses, einschließlich der Bereitstellung von Medienstreams (124) für die zweite Gruppe von Teilnehmern (122) mithilfe der jeweiligen Endpunkte (120).

10. Das Verfahren nach Anspruch 9, das ferner Folgendes umfasst:
Bereitstellen der ersten Kommunikation für den mindestens einen der ersten Gruppe von Teilnehmern (122) mithilfe von mindestens einem der ersten Ereignisendpunkte (120).

11. Das Verfahren nach Anspruch 9, das ferner Folgendes umfasst:
Bereitstellen einer zweiten Kommunikation, die dazu gedacht ist,
die Überlagerung zu korrigieren, für mindestens einen der zweiten Gruppe von Teilnehmern (122) mithilfe von mindestens einem der zweiten Ereignisendpunkte (120).

12. Das Verfahren nach Anspruch 9, das ferner Folgendes umfasst:
Erfassen der Überlagerung in Reaktion darauf, dass sich mindestens einer der zweiten Gruppe von Teilnehmern (122) für das zweite Ereignis anmeldet.

13. Das Verfahren nach Anspruch 9, das ferner Folgendes umfasst:
Auflösen der Überlagerung mithilfe einer zweiten Kommunikation,
die nach Bereitstellung der ersten Kommunikation von mindestens einem der ersten Gruppe von Teilnehmern (122) empfangen wurde.

14. Das Verfahren nach Anspruch 9, wobei einer des ersten Satzes von Ereignisendpunkten (120) der gleiche ist wie einer des zweiten Satzes von Ereignisendpunkten (120).

15. Computerprogrammprodukt, das Computerprogrammcodemittel zum Durchführen aller Schritte eines der Ansprüche 9 bis 14 umfasst, wenn das Programm auf einem Computer ausgeführt wird.

## Revendications

1. Système comprenant :
une interface réseau (131) ; et
un système de gestion d'événements (110) configuré pour détecter un chevauchement qui est une communité de ressources entre un premier événement et un second événement qui est planifié pour commencer après le premier événement, le premier événement comprenant un premier ensemble de points d'extrémité d'événement (120) configuré pour fournir un premier ensemble de flux multimédias (124) à un premier ensemble de participants (122) et le second événement comprenant un second ensemble de points d'extrémité d'événement (120) configuré pour fournir un second ensemble de flux multimédias (124) à un second ensemble de participants (122), dans lequel un point d'extrémité d'événement comprend un dispositif ou système configuré pour générer, fournir et/ou recevoir l'ensemble respectif de flux multimédias (124) ; **caractérisé par le fait que** :
le système de gestion d'événements (110) est configuré pour fournir une première communication en utilisant l'interface réseau (131) vers un ou plusieurs participants du premier ensemble de participants, la première communication suscitant une action par le ou les participants du premier ensemble de participants afin de remédier au chevauchement de telle sorte que des ressources pour le premier événement soient distinctes de ressources pour le second événement, dans lequel lors de la résolution du chevauchement, le système de gestion d'événements (110) est configuré pour amener le second événement à commencer, comprenant la fourniture de flux multimédias (124) au second ensemble de participants (122) en utilisant des points d'extrémité respectifs (120).

2. Système selon la revendication 1, dans lequel le système de gestion d'événements (110) est configuré pour surveiller l'état en temps réel du système et générer des informations d'événement de contexte dynamiques, les informations de contexte dynamiques comprenant des informations sur un état relatif d'événements comprenant des instants de début et de fin des événements et une disponibilité de points d'extrémité d'événement (120) et d'autres ressources multimédias, le système de gestion d'événements (110) étant configuré pour détecter le chevauchement en utilisant des première et seconde spécifications d'événement enregistrées associées aux premier et second événements, respectivement, et les informations de contexte d'événement dynamiques.

3. Système selon la revendication 1, dans lequel le système de gestion d'événements (110) est configuré pour recevoir une seconde communication en provenance du participant du premier ensemble de participants (122) en utilisant l'interface réseau (131) après la fourniture de la première communication.

4. Système selon la revendication 3, dans lequel le système de gestion d'événements (110) est configuré pour résoudre le chevauchement en réponse à la réception de la seconde communication.

5. Système selon la revendication 3, dans lequel le système de gestion d'événements (110) est configuré pour fournir une troisième communication à au moins un participant du second ensemble de participants (122) en utilisant l'interface réseau (131) en réponse à la réception de la seconde communication.

6. Système selon la revendication 1, dans lequel le système de gestion d'événements (110) est configuré pour fournir une seconde communication prévue pour remédier au chevauchement sur au moins un participant du second ensemble de participants (122) en utilisant l'interface réseau (131).

7. Système selon la revendication 1, dans lequel le système de gestion d'événements (110) est configuré pour déclencher le second événement en fonction d'une spécification d'événement enregistrée associée au second événement.

8. Système selon la revendication 1, dans lequel le système de gestion d'événements (110) est configuré pour amener le second ensemble de points d'extrémité d'événement à fournir le second ensemble de flux multimédias (124) au second ensemble de participants (122) après que le chevauchement est résolu.

9. Procédé comprenant :
la détection d'un chevauchement qui est une communité de ressources entre un premier événement qui est en cours et un second événement qui est planifié pour commencer, le premier événement étant configuré pour fournir un premier ensemble de flux multimédias (124) à un premier ensemble de participants (122) en utilisant un premier ensemble de points d'extrémité d'événement (120), le second événement étant configuré pour fournir un second ensemble de flux multimédias (124) à un second ensemble de participants (122) en utilisant un second ensemble de points d'extrémité d'événement (120), un point d'extrémité d'événement (120) comprenant un dispositif ou système configuré pour générer, fournir et/ou recevoir l'ensemble respectif de flux multimédias (124) ; **caractérisé par**
la fourniture d'une première communication à un ou plusieurs participants du premier ensemble de participants (122) suscitant une action par le ou les participants du premier ensemble de participants (122) afin de remédier au chevauchement de telle sorte que des ressources pour le premier événement soient distinctes de ressources pour le second événement ; et,
lors de la résolution du chevauchement, le fait d'amener le second événement à commencer, comprenant la fourniture de flux multimédias (124) au second ensemble de participants (122) en utilisant des points d'extrémité respectifs (120).

10. Procédé selon la revendication 9, comprenant en outre : la fourniture de la première communication à l'au moins un participant du premier ensemble de participants (122) en utilisant au moins un point d'extrémité d'événement parmi les premiers points d'extrémité d'événement (120).

11. Procédé selon la revendication 9, comprenant en outre : la fourniture d'une seconde communication destinée à remédier au chevauchement sur au moins un participant du second ensemble de participants (122) en utilisant au moins un point d'extrémité d'événement parmi les seconds points d'extrémité d'événement (120).

12. Procédé selon la revendication 9, comprenant en outre : la détection du chevauchement en réponse à au moins un participant du second ensemble de participants (122) s'enregistrant pour le second événement.

13. Procédé selon la revendication 9, comprenant en outre : la résolution du chevauchement en utilisant une seconde communication reçue depuis au moins un participant du premier ensemble de participants (122) après la fourniture de la première communication.

14. Procédé selon la revendication 9, dans lequel un point d'extrémité d'événement du premier ensemble de points d'extrémité d'événement (120) est le même qu'un point d'extrémité d'événement du second ensemble de points d'extrémité d'événement (120).

15. Produit programme d'ordinateur comprenant un moyen de code de programme d'ordinateur pour réaliser toutes les étapes de l'une quelconque des revendications 9 à 14 lorsque ledit programme est exécutée sur un ordinateur.
